# EUROPEAN PATENT SPECIFICATION

(11) **EP 3 968 599 B1**
(45) Date of publication and mention of the grant of the patent: **03.06.2026**
(21) Application number: 20195237.1
(22) Date of filing: 09.09.2020
(51) Int. Cl.: H04L 67/12

(54) **A METHOD FOR SYNCHRONIZATION OF A COMMUNICATION BETWEEN A VEHICLE AND A BACKEND DEVICE**
VERFAHREN ZUR SYNCHRONISATION EINER KOMMUNIKATION ZWISCHEN EINEM FAHRZEUG UND EINEM NACHENDGERÄT
PROCÉDÉ DE SYNCHRONISATION D'UNE COMMUNICATION ENTRE UN VÉHICULE ET UN DISPOSITIF DORSAL

(43) Date of publication of application: 16.03.2022
(73) Proprietor: VOLKSWAGEN AG, 38440 Wolfsburg (DE)
(72) Inventor: Titze, Jan, 38114 Braunschweig (DE); de Bakker, Marco, 6021 ZL Budel (NL)

(56) References cited:
- EP-A1- 3 322 204
- GB-A- 2 579 346
- US-A1- 2019 004 939

## Description

The invention is related to a method for synchronization of a communication between a vehicle and a backend device in a vehicle-to-cloud-system, especially to configure the vehicle, according to the independent method claim. Further, the invention is related to an electronic control unit according to the independent device claim. Furthermore, the invention is related to a vehicle comprising a corresponding electronic control unit according to the second independent device claim. Moreover, the invention is related to a computer program product for a corresponding method according to the independent product claim.

Vehicle-to-cloud-systems are basically known, for example from DE 10 2015 200 422 A1. Electronic control units in vehicles usually have computing units. However, these computing units are often limited in processing power and storage amount. Also, the access to programming updates or other data is sometimes combined with complications. On the other hand, cloud computers usually provide high computational power, large memory and easy access to updates as well as to other data. Vehicle-to-cloud-systems serve to provide cloud-computing applications in order to enhance vehicle functionalities for increased safety and intelligence as well as environmental and customer friendliness while adding to the comfortable and enjoyable operations. For this aim, electronic control units can send requests for certain applications to be provided within the cloud. Further, in modern vehicle-to-cloud-systems, a synchronization can be provided between the electronic control units and the cloud. However, known systems do not consider or treat the situations flexibly enough to provide a synchronization between a vehicle and the cloud. Synchronization processes usually require a long time, a big amount of data to be transmitted and high network load.

Similar systems are disclosed in the documents US 2019 / 004 939, GB 2 579 346 A as well as in EP 3 322 204 A1.

The aim of the present invention is to provide a method for controlling a communication between a vehicle and a backend device in a vehicle-to-cloud-system, especially to configure the vehicle with improved, flexible functionality. The aim of the present invention is especially to provide a method for controlling a communication between a vehicle and a backend device in a vehicle-to-cloud-system, which enables an improved synchronization process, especially to configure the vehicle, and a flexible transmission of data as well as a relieving the network. Also, the aim of the invention is to provide a corresponding electronic control unit for the vehicle, a corresponding vehicle and a related computer program product for the inventive method.

According to the first aspect, the invention provides a method for controlling a communication between a vehicle and a backend device in a vehicle-to-cloud-system, especially to configure the vehicle, with the features of the independent method claim. According to the second aspect, the invention provides an electronic control unit with the features of the independent device claim. According to the third aspect, the invention provides a vehicle comprising a corresponding electronic control unit with the features of the second independent device claim. Additionally, an aspect of the invention is a corresponding vehicle-to-cloud-system. According to the fourth aspect, the invention provides a computer program product for a corresponding method with the features of the independent product claim. Details and features disclosed on individual aspects of the invention also apply to the other aspects of the invention and vice versa.

According to the first aspect, the invention provides a method for synchronization of a communication between a vehicle and a backend device in a vehicle-to-cloud-system, for a configuration of the vehicle including an installation, an update of hardware, software and firmware, wherein the backend device is a computer or a group of computers as a representative of a cloud, comprising the following steps:
1) providing a first data repository comprising (essentially or only) static data at the vehicle, wherein the static data comprises slowly or not changing data, which do not need to be changed more than once,
2) providing a second data repository comprising (essentially or only) dynamic data at the vehicle, wherein dynamic data comprises frequently changing data, which needs to be synchronized more often than the static data
3) providing a first synchronization schedule to synchronize the first data repository between the vehicle and the backend device,
4) providing a second synchronization schedule to synchronize the second data repository between the vehicle and the backend device,
5) execute at least one communication test between the vehicle and the backend device,
6) synchronize the first data repository between the vehicle and the backend device according to the first synchronization schedule
7) synchronize the second data repository between the vehicle and the backend device according to the second synchronization schedule and
8) execute at least one verification test between the vehicle and the backend device in order to verify if the synchronization of the first data repository and/or the second data repository was successful.

A backend device within the meaning of the invention is a computer or a group of many computers providing a high computational power, a large memory and easy access to updates as well as to other data that can be used in the vehicle. The backend device within the meaning of the invention is the representative of the cloud.

The configuration of the vehicle within the meaning of the invention can comprise an arrangement of each of the vehicle devices using mobile online services, according to their nature, number and chief characteristics. The configuration may include the installation and updates of hardware, software, firmware as well as documentation. The configuration serves for better functionality and performance of the vehicle.

The static data within the meaning of the invention can be slowly or not changing data, for example personal data, consent data, contact data, interest consideration data, anonymous data, transaction data, transaction activation data, installed base data and so on.

The dynamic data within the meaning of the invention can be frequently changing data, for example tracking data, location data, privacy settings, video streaming data, audio streaming data, navigation data, weather forecast data, sensor data, assistance system data, automatic driving data, highly autonomous driving data, autonomous driving data, traffic signs recognition data, phone call data, video call data and so on.

The first data repository and the second data repository within the meaning of the invention can be provided as lists, databases, tables, files or other structures, which can be stored in a memory unit of an electronic control unit of the vehicle.

The invention provides at least two repositories for the static data and for the dynamic data. Also, the invention may provide more than two repositories in order to sort the data in more detail and to treat different data types more flexibly.

The first synchronization schedule and the second synchronization schedule within the meaning of the invention can also be called schemata of how to communicate the corresponding data between the vehicle and the backend device. The schedules can comprise any details about the workflow of the synchronization, like for example preferred times for synchronization, amount of transmitted data, different triggers, different numbers of repetitions and so on.

The inventive idea is to provide an adapted mechanism for the synchronization process, which is flexibly executed dependent on different data types which should be synchronized between the vehicle and the backend device. The invention recognizes that different data types change with different velocities. Data, which are static and not or only slowly changing, probably do not need to be exchanged frequently, for example more than once. Data, which are frequently changing, can be treated in a different way than the static data. This frequently changing data, that is dynamic data, probably needs to be synchronized more often than the static data. For this aim, the invention provides different schedules for synchronization of different data types. These different schedules are individually adapted to the different data types which have different changing character. The invention separates at least changing data from static data in different repositories, which can be separately communicated between the backend device and the vehicle.

Thus, the invention provides an improved method for controlling a communication between a vehicle and a backend device in a vehicle-to-cloud-system, especially to configure the vehicle, with improved, flexible functionality. Also, the invention provides an improved method for controlling a communication between a vehicle and a backend device in a vehicle-to-cloud-system, which enables improved synchronization process, especially to configure the vehicle, flexible transmission of data and relieving the network.

Further, the invention may provide by a method for controlling a communication between a vehicle and a backend device that the first data repository and/or the second data repository is provided as a list, a database, a table, a file, an XML and/or JSON structure. Thus, the repositories may be provided in a flexible manner suitably for different vehicle models having different software and/or hardware components.

Furthermore, the invention may provide by a method for controlling a communication between a vehicle and a backend device that the static data and/or the dynamic data comprise data about at least one vehicle device using mobile online services provided in the vehicle-to-cloud-system. The mobile online services can include safety, intelligence, environmental, comfortable and enjoyable operations. The at least one vehicle device can be one of the following devices:
- sensor device, such as crash-sensor, velocity sensor, and so on,
- safety device, such as breakdown call, emergency call,
- environment device, such as weather forecast, pollutant load sensor, environmental zone detection unit,
- information device, for example for online traffic information, online destination import, online route import, online POI search, my POIs, petrol stations, parking spaces, vehicle status report, time manager, weather, news and so on,
- entertainment device, for example for streaming services, and/or
- comfort device, such as door closing detectors, light off detectors, parking position detectors, vehicle status and/or condition detector, trip database, user calendar, information call and so on.

Thus, the invention may contribute to a broader and better functionality of mobile online services for the vehicle.

Also, the invention may provide by a method for controlling a communication between a vehicle and a backend device that the static data and/or the dynamic data comprise data about a version of the mobile online services. Thus, the versioning of the mobile online services can be provided. Therefore, updates can be provided in a controlled and preferable manner.

Moreover, the invention may provide by a method for controlling a communication between a vehicle and a backend device that the static data comprise slowly or not changing data that need to be actualized maximum in a monthly time period, in a yearly time period, after a commissioning of the vehicle, after a technical inspection of the vehicle, after a change of a user of the vehicle and/or after a request of a user of the vehicle. Thus, the static data may be treated more efficiently in order to relieve the network as well as computing power for synchronization. It is also possible that the static data may be synchronized separately from the dynamic data. Therefore, waiting times for synchronization, especially for updates, can be reduced significantly. For example, the static data can comprise personal data, consent data, contact data, interest consideration data, anonymous data, transaction data and/or transaction activation data.

In addition, the invention may provide by a method for controlling a communication between a vehicle and a backend device that the dynamic data comprise frequently changing data that need to be actualized at least in a daily time period, after every change of and/or repeatedly every day. Thus, individual treatment of frequently changing data can be provided. It is possible that the frequently changing data can be treated separately from the static data. Therefore, reduced network load for synchronization can be ensured. The frequently changing data can be synchronized not completely every time. It is possible that only changes on the second data repository need to synchronized. For example, the dynamic data can comprise tracking data, location data, privacy settings, video streaming data, audio streaming data, navigation data, weather forecast data, sensor data, assistance system data, automatic driving data, highly autonomous driving data, autonomous driving data, traffic signs recognition data, phone call data and/or video call data.

Also, the invention may provide by a method for controlling a communication between a vehicle and a backend device that the first synchronization schedule includes at least one of the following triggers to synchronize the first data repository between the vehicle and the backend device:
- a first commissioning of the vehicle,
- a technical inspection,
- a system update,
- a change of a user of the vehicle,
- new static data are available in the first data repository,
- new updates for the static data are available at the backend device for the first data repository and/or
- a user request.

In this way, unnecessary overwriting of static data that is slowly or not changing data, can be avoided.

Apart from this, the invention may provide by a method for controlling a communication between a vehicle and a backend device that the second synchronization schedule includes at least one of the following triggers to synchronize the second data repository between the vehicle and the backend device:
- ignition is on,
- motor is on,
- new dynamic data are available in the second data repository,
- new updates for the dynamic data are available at the backend device for the second data repository and/or
- leaving privacy mode.

In this way, dynamic data may be treated more flexibly by the synchronization.

Further, the invention may provide by a method for controlling a communication between a vehicle and a backend device that the first synchronization schedule includes at least one of the following rules to synchronize the first data repository between the vehicle and the backend device:
- all static data of the first data repository will be synchronized.

Since the static data do not need to be communicated frequently, all static data may be transmitted between the vehicle and the backend device after a corresponding trigger.

Furthermore, the invention may provide by a method for controlling a communication between a vehicle and a backend device that the second synchronization schedule includes at least one of the following rules to synchronize the second data repository between the vehicle and the backend device:
- all dynamic data of the second data repository will be synchronized at least once, and/or
- only changes of the data and/or updates for the data will be synchronized, especially regularly.

All dynamic data can be synchronized at least once, for example after a commissioning of the vehicle, after a technical inspection of the vehicle, after a change of a user of the vehicle and/or after a request of a user of the vehicle.

After that, only changes of dynamic data may be transmitted between the vehicle and the backend device.

Over and above, the invention may provide by a method for controlling a communication between a vehicle and a backend device that steps 3) and 4) are executed automatically at the backend device, automatically in the vehicle or manually in the vehicle, especially by a user of the vehicle or a service technician. Thus, flexible execution of the inventive method is provided.

In addition, the invention may provide by a method for controlling a communication between a vehicle and a backend device that the a user of a vehicle will be notified by a mobile display device or a display device at a vehicle dashboard about a content of the first data repository, a content of the second data repository, the first synchronization schedule and/or the second synchronization schedule. Thus, the trust in the system can be strengthened by a user of the vehicle.

Apart from this, the invention may provide by a method for controlling a communication between a vehicle and a backend device that a confirmation and/or adjustment possibility of a content of the first data repository, a content of the second data repository, the first synchronization schedule and/or the second synchronization schedule is provided for a user of the vehicle, especially by a mobile display device or a display device at a vehicle dashboard. In this way, the invention can increase user comfort.

According to the second aspect, the invention provides an electronic control unit comprising: a memory, in which a program code is stored, and a computing unit, wherein when carrying out the program code by the computing unit, a method is performed as described above. With the help of the inventive electronic control unit, the same advantages can be achieved as with the help of the inventive method described above. Full reference is made to these advantages in the present case.

The invention provides according to the third aspect a vehicle comprising a corresponding electronic control unit. With the help of the inventive vehicle, the same advantages can be achieved as with the help of the inventive method described above. Full reference is made to these advantages in the present case.

Another advantage of the invention can be achieved by providing a corresponding vehicle-to-cloud-system.

According to the fourth aspect, the invention provides a computer program product comprising a program code for carrying out a method as described above. With the help of the inventive computer program product, the same advantages can be achieved as with the help of the inventive method described above. Full reference is made to these advantages in the present case.

The invention and its further developments as well as its advantages will be explained in more detail below using figures. The figures show schematically:
- Fig. 1: a schematic design of a vehicle-to-cloud-system within the meaning of the invention and
- Fig. 2: a schematic flow diagram of an inventive method.

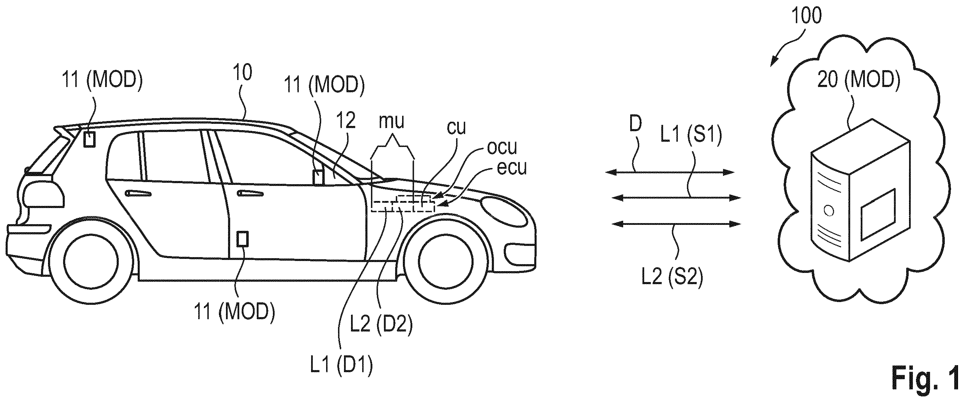

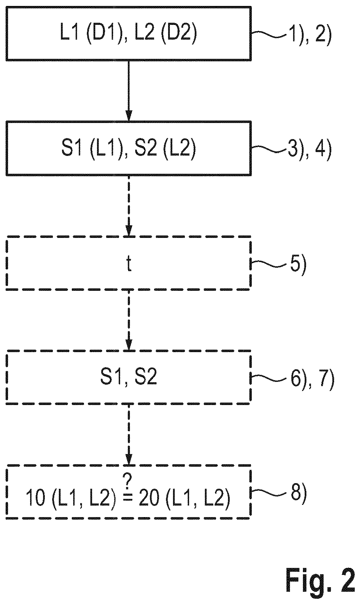

Figure 1 shows a vehicle-to-cloud-system 100 within the scope of the invention. The vehicle-to-cloud-system 100 can have at least one vehicle 10 and a backend device 20 within the cloud. The vehicle 10 can have an electronic control unit ecu. To increase the functionality of the vehicle 10, the backend device 20 can provide high computational power, large memory and easy access to updates as well as to another data. Thus, cloud-computing applications can enhance vehicle functionalities, for example for more safety, intelligence, environmental and customer-friendly and comfortable operations as well as enjoyable operations. For this aim, the electronic control unit ecu can send requests for certain applications to be provided by the backend device 20. Also, a synchronization can be provided between the electronic control unit ecu and the backend device 20. To improve the synchronization between the vehicle 10 and the backend device 20, the invention provides a special method for synchronization of a communication D between a vehicle 10 and a backend device 20 in a vehicle-to-cloud-system 100, especially to configure the vehicle 10, which is schematically shown in figure 2.

Both figures 1 and 2 serve for explanation of an inventive method for synchronization of a communication D between the vehicle 10 and the backend device 20 in the vehicle-to-cloud-system 100 schematically showed in figure 1, especially to configure the vehicle 10,
comprising the following steps:
1) providing a first data repository L1 comprising (essentially or only) static data D1 at the vehicle 10,
2 providing a second data repository L2 comprising (essentially or only) dynamic data D2 at the vehicle 10,
3 providing a first synchronization schedule S1 to synchronize the first data repository L1 between the vehicle 10 and the backend device 20,
4 providing a second synchronization schedule S2 to synchronize the second data repository L2 between the vehicle 10 and the backend device 20.

The configuration of the vehicle 10 can comprise the arrangement of each of its vehicle devices 11 using mobile online services MOD, according to their kind, version, number and characteristics. The configuration may include the choice and updates of hardware, software, firmware and documentation.

The static data D1 can be slowly or not changing data, for example personal data, consent data, contact data, interest consideration data, anonymous data, transaction data, transaction activation data, installed base data and so on.

The dynamic data D2 can be frequently changing data, for example tracking data, location data, privacy settings, video streaming data, audio streaming data, navigation data, weather forecast data, sensor data, assistance system data, automatic driving data, highly autonomous driving data, autonomous driving data, traffic signs recognition data, phone call data, video call data and so on.

The first data repository L1 and the second data repository L2 within the meaning of the invention can be provided as lists, databases, tables, files or other structures, such as XML and/or JSON, which can be stored in a memory unit of an electronic control unit of the vehicle.

The invention provides at least two repositories L1, L2 for the static data D1 and for the dynamic data D2 or even more than two repositories L1, L2 in order to treat different kinds of data more flexibly.

The first synchronization schedule S1 and the second synchronization schedule S2 can comprise schemata of how to communicate the corresponding data between the vehicle 10 and the backend device 20 to expedite the synchronization. The schedules S1, S2 can comprise any details about the workflow of the synchronization, like for example, selected times for synchronization, amount of transmitted data, different triggers, different numbers of repetitions and so on.

For this aim, the invention separates at least dynamic data D2 from static data D1 in different repositories L1, L2, which can be separately synchronized between the backend device 20 and the vehicle 10.

The inventive method provides an adapted mechanism for the synchronization process, which is flexibly executed dependent on different data types which should be synchronized between the vehicle 10 and the backend device 20. Different data types require different synchronization schedules.

Data, which are static and not or only slowly changing, probably do not need to be exchanged frequently, for example more than one time. The static data D1 can be actualized maximum in a monthly time period, in a yearly time period, after a commissioning of the vehicle 10, after a technical inspection of the vehicle 10, after a change of a user of the vehicle 10 and/or after a request of a user of the vehicle 10.

The first synchronization schedule S1 can include at least one of the following triggers to synchronize the first data repository L1 between the vehicle 10 and the backend device 20:
- a first commissioning of the vehicle 10,
- a technical inspection,
- a system update,
- a change of a user of the vehicle 10,
- new static data D1 are available in the first data repository L1,
- new updates for the static data D1 are available at the backend device 20 for the first data repository L1 and/or
- a user request.

Since the static data D1 do not need to be synchronized frequently, all static data D1 may be transmitted between the vehicle 10 and the backend device 20 only once after a corresponding trigger.

Data, which are frequently changing, probably need to be synchronized more often than static data and can be treated more individually according to the changes of the data. The dynamic data D2 can be actualized at least in a daily time period, after every change and/or repeatedly every day.

The second synchronization schedule S2 can include at least one of the following triggers to synchronize the second data repository L2 between the vehicle 10 and the backend device 20:
- ignition is on,
- motor is on,
- new dynamic data D2 are available in the second data repository L2,
- new updates for the dynamic data D2 are available at the backend device 20 for the second data repository L2 and/or
- leaving privacy mode.

The second synchronization schedule S2 can include at least one of the following rules to synchronize the second data repository L2 between the vehicle 10 and the backend device 20:
- all dynamic data of the second data repository L2 will be synchronized at least once, for example after a commissioning of the vehicle 10, after a technical inspection of the vehicle 10, after a change of a user of the vehicle 10 and/or after a request of a user of the vehicle 10, and/or
- only changes of the dynamic data and/or updates for the dynamic data will be synchronized regularly. Thus, only changes of dynamic data may be transmitted between the vehicle 10 and the backend device 20 if needed.

As figure 2 further shows, the inventive method can comprise at least one of the following steps,
5) execute at least one communication test t between the vehicle 10 and the backend device 20,
6) synchronize the first data repository L1 between the vehicle 10 and the backend device 20 according to the first synchronization schedule S1,
7) synchronize the second data repository L2 between the vehicle 10 and the backend device 20 according to the second synchronization schedule S2, and/or
8) execute at least one verification test between the vehicle 10 and the backend device 20 in order to verify if the synchronization of the first data repository L1 and/or the second data repository L2 was successful.

Thus, the invention may provide an improved and secure configuration process of the vehicle 10.

According to the invention, it is possible that steps 3) and 4) can be executed automatically at the backend device 20, automatically in the vehicle 10 or manually in the vehicle 10, especially by a user of the vehicle 10 or a service technician.

As figure 1 schematically indicates, the invention may provide that the user of a vehicle will be notified by a mobile display device or a display device at a vehicle dashboard 12 about a content of the first data repository L1, a content of the second data repository L2, the first synchronization schedule S1 and/or the second synchronization schedule S2.

Also, the invention may provide a confirmation and/or adjustment possibility of a content of the first data repository L1, a content of the second data repository L2, the first synchronization schedule S1 and/or the second synchronization schedule S2 for a user of the vehicle 10, especially by a mobile display device or a display device at a vehicle dashboard 12.

An electronic control unit ecu comprising: a memory unit mu, in which a program code is stored, and a computing unit cu, wherein when carrying out the program code by the computing unit cu, a method is performed as described above, provides the second aspect of the invention. In other words, the electronic control unit ecu is configured in such a way to execute the method as described above. The repositories L1, L2 and/or the schedules S1, S2 can be stored in the memory mu.

The vehicle 10 comprising a corresponding electronic control unit ecu provides the third aspect of the invention.

Another aspect of the invention can be a corresponding vehicle-to-cloud-system 100.

Also, a computer program product comprising a program code for carrying out a method as described above provides an aspect of the invention.

The above description of the figures describes the present invention only in the context of examples. Of course, individual features of the embodiments can be combined with each other, provided it is technically reasonable, without leaving the scope of the invention defined by the appended claims.

### Reference signs

- 100: vehicle-to-cloud-system

- 10: vehicle
- 11: vehicle device
- 12: vehicle dashboard

- 20: backend device

- D: communication

- ecu: electronic control unit
- cu: computing unit
- mu: memory unit

- ocu: connectivity unit

- D1: static data
- D2: dynamic data

- L1: first data repository
- L2: second data repository

- S1: first synchronization schedule
- S2: second synchronization schedule

- MOD: mobile online service

- t: communication test

## Claims

1. A method for synchronization of a communication (D) between a vehicle (10) and a backend device (20) in a vehicle-to-cloud-system (100), for a configuration of the vehicle (10) including an installation, an update of hardware, software, and firmware, wherein the backend device (20) is a computer or a group of computers as a representative of a cloud,
comprising the following steps:
1) providing a first data repository (L1) comprising static data (D1) at the vehicle (10), wherein the static data comprise slowly or not changing data, which do not need to be changed more than once
2) providing a second data repository (L2) comprising dynamic data (D2) at the vehicle (10), wherein the dynamic data (D2) comprise frequently changing data, which needs to be synchronized more often than the static data,
3) providing a first synchronization schedule (S1) to synchronize the first data repository (L1) between the vehicle (10) and the backend device (20),
4) providing a second synchronization schedule (S2) to synchronize the second data repository (L2) between the vehicle (10) and the backend device (20),
5) execute at least one communication test (t) between the vehicle (10) and the backend device (20),
6) synchronize the first data repository (L1) between the vehicle (10) and the backend device (20) according to the first synchronization schedule (S1),
7) synchronize the second data repository (L2) between the vehicle (10) and the backend device (20) according to the second synchronization schedule (S2), and
8) execute at least one verification test between the vehicle (10) and the backend device (20) in order to verify if the synchronization of the first data repository (L1) and/or the second data repository (L2) was successful.

2. The method according to claim 1,
**characterized in that**
the first data repository (L1) and/or the second data repository (L2) is provided as a list, a database, a table, a file, an XML and/or JSON structure,
and/or the static data (D1) and/or the dynamic data (D2) comprise data about at least one vehicle device (11) using mobile online services (MOD) provided in the vehicle-to-cloud-system (100), wherein especially the mobile online services (MOD) include safety, intelligence, environmental, comfortable and enjoyable operations,
and/or the static data (D1) comprise data about a version of the mobile online services (MOD).

3. The method according to one of the preceding claims,
**characterized in that**
the static data (D1) comprise slowly or not changing data that need to be actualized maximum in a monthly time period, in a yearly time period, after a commissioning of the vehicle (10), after a technical inspection of the vehicle (10), after a change of a user of the vehicle (10) and/or after a request of a user of the vehicle (10), and/or the static data (D1) comprise personal data, consent data, contact data, interest consideration data, anonymous data, transaction data and/or transaction activation data.

4. The method according to one of the preceding claims,
**characterized in that**
the dynamic data (D2) comprise frequently changing data that need to be actualized at least in a daily time period, after every change of and/or repeatedly every day, and/or the dynamic data (D2) comprise tracking data, location data, privacy settings, video streaming data, audio streaming data, navigation data, weather forecast data, sensor data, assistance system data, automatic driving data, highly autonomous driving data, autonomous driving data, traffic signs recognition data, phone call data and/or video call data.

5. The method according to one of the preceding claims,
**characterized in that**
the first synchronization schedule (S1) includes at least one of the following triggers to synchronize the first data repository (L1) between the vehicle (10) and the backend device (20):
- a first commissioning of the vehicle (10),
- a technical inspection,
- a system update,
- a change of a user of the vehicle (10),
- new static data (D1) are available in the first data repository (L1),
- new updates for the static data (D1) are available at the backend device (20) for the first data repository (L1) and/or
- a user request.

6. The method according to one of the preceding claims,
**characterized in that**
the second synchronization schedule (S2) includes at least one of the following triggers to synchronize the second data repository (L2) between the vehicle (10) and the backend device (20):
- ignition is on,
- motor is on,
- new dynamic data (D2) are available in the second data repository (L2),
- new updates for the dynamic data (D2) are available at the backend device (20) for the second data repository (L2) and/or
- leaving privacy mode.

7. The method according to one of the preceding claims,
**characterized in that**
the first synchronization schedule (S1) includes the following rule to synchronize the first data repository (L1) between the vehicle (10) and the backend device (20):
- all static data (D1) of the first data repository (L1) will be synchronized.

8. The method according to one of the preceding claims,
**characterized in that**
the second synchronization schedule (S2) includes at least one of the following rules to synchronize the second data repository (L2) between the vehicle (10) and the backend device (20):
- all dynamic data (D2) of the second data repository (L2) will be synchronized at least once, and/or
- only changes of the dynamic data (D2) and/or updates for the dynamic data (D2) will be synchronized regularly.

9. The method according to one of the preceding claims,
**characterized in that**
providing the first synchronization schedule (S1) and providing the second synchronization schedule (S2) are executed automatically at the backend device (20), automatically in the vehicle (10) or manually in the vehicle (10), especially by a user of the vehicle (10) or a service technician.

10. The method according to one of the preceding claims,
**characterized in that**
the a user of a vehicle will be notified by a mobile display device or a display device at a vehicle dashboard (12) about a content of the first data repository (L1), a content of the second data repository (L2), the first synchronization schedule (S1) and/or the second synchronization schedule (S2),
and/or a confirmation and/or adjustment possibility of a content of the first data repository (L1), a content of the second data repository (L2), the first synchronization schedule (S1) and/or the second synchronization schedule (S2) is provided for a user of the vehicle (10), especially by a mobile display device or a display device at a vehicle dashboard (12).

11. An electronic control unit (ecu) comprising:
a memory unit (mu), configured to store a program code, and
a computing unit (cu), wherein when carrying out the program code by the computing unit (c), a method according to one of the preceding claims is performed.

12. A vehicle (10) comprising an electronic control unit (ecu) according to the preceding claim.

13. A computer program product comprising instructions which, when the program is executed by a computer, cause the computer to carry out a method according to any one of claims 1 to 10.

## Patentansprüche

1. Verfahren für eine Synchronisierung einer Kommunikation (D) zwischen einem Fahrzeug (10) und einer Backend-Vorrichtung (20) in einem Fahrzeug-zu-Cloud-System (100), für eine Konfiguration des Fahrzeugs (10) einschließlich einer Installation, einer Aktualisierung von Hardware, Software und Firmware, wobei die Backend-Vorrichtung (20) ein Computer oder eine Gruppe von Computern stellvertretend für eine Cloud ist,
umfassend die folgenden Schritte:
1) Bereitstellen eines ersten Daten-Repositorys (L1), umfassend statische Daten (D1), an dem Fahrzeug (10), wobei die statischen Daten sich langsam oder nicht ändernde Daten umfassen, die nicht mehr als einmal geändert werden müssen
2) Bereitstellen eines zweiten Daten-Repositorys (L2), umfassend dynamische Daten (D2),an dem Fahrzeug (10), wobei die dynamischen Daten (D2) sich häufig ändernde Daten umfassen, die öfter als die statischen Daten synchronisiert werden müssen,
3) Bereitstellen eines ersten Synchronisierungsplans (S1), um das erste Daten-Repository (L1) zwischen dem Fahrzeug (10) und der Backend-Vorrichtung (20) zu synchronisieren,
4) Bereitstellen eines zweiten Synchronisierungsplans (S2), um das zweite Daten-Repository (L2) zwischen dem Fahrzeug (10) und der Backend-Vorrichtung (20) zu synchronisieren,
5) Durchführen mindestens eines Kommunikationstests (t) zwischen dem Fahrzeug (10) und der Backend-Vorrichtung (20),
6) Synchronisieren des ersten Daten-Repositorys (L1) zwischen dem Fahrzeug (10) und der Backend-Vorrichtung (20) gemäß dem ersten Synchronisierungsplan (S1),
7) Synchronisieren des zweiten Daten-Repositorys (L2) zwischen dem Fahrzeug (10) und der Backend-Vorrichtung (20) gemäß dem zweiten Synchronisierungsplan (S2), und
8) Durchführen mindestens eines Verifizierungstests zwischen dem Fahrzeug (10) und der Backend-Vorrichtung (20), um zu verifizieren, ob die Synchronisierung des ersten Daten-Repositorys (L1) und/oder des zweiten Daten-Repositorys (L2) erfolgreich war.

2. Verfahren nach Anspruch 1,
**dadurch gekennzeichnet, dass**
das erste Daten-Repository (L1) und/oder das zweite Daten-Repository (L2) als eine Liste, eine Datenbank, eine Tabelle, eine Datei, eine XML- und/oder JSON-Struktur bereitgestellt wird,
und/oder die statischen Daten (D1) und/oder die dynamischen Daten (D2) Daten über mindestens eine Fahrzeugvorrichtung (11) umfassen, die mobile Online-Dienste (MOD) verwendet, die in dem Fahrzeug-zu-Cloud-System (100) bereitgestellt werden, wobei insbesondere die mobilen Online-Dienste (MOD) Sicherheits-, Intelligenz-, Umwelt-, Komfort- und Vergnügungsabläufe einschließen, und/oder die statischen Daten (D1) Daten über eine Version der mobilen Online-Dienste (MOD) umfassen.

3. Verfahren nach einem der vorstehenden Ansprüche,
**dadurch gekennzeichnet, dass**
die statischen Daten (D1) sich langsam oder nicht ändernde Daten umfassen, die maximal in einer monatlichen Zeitspanne, in einer jährlichen Zeitspanne, nach einer Inbetriebnahme des Fahrzeugs (10), nach einer technischen Inspektion des Fahrzeugs (10), nach einer Änderung eines Benutzers des Fahrzeugs (10) und/oder nach einer Anfrage eines Benutzers des Fahrzeugs (10) aktualisiert werden müssen, und/oder die statischen Daten (D1) persönliche Daten, Einverständnisdaten, Kontaktdaten, Interessensabwägungsdaten, anonyme Daten, Transaktionsdaten und/oder Transaktionsaktivierungsdaten umfassen.

4. Verfahren nach einem der vorstehenden Ansprüche,
**dadurch gekennzeichnet, dass**
die dynamischen Daten (D2) sich häufig ändernde Daten umfassen, die mindestens in einer täglichen Zeitspanne, nach jeder Änderung von und/oder wiederholt jeden Tag aktualisiert werden müssen, und/oder die dynamischen Daten (D2) Verfolgungsdaten, Standortdaten, Datenschutzeinstellungen, Video-Streaming-Daten, Audio-Streaming-Daten, Navigationsdaten, Wettervorhersagedaten, Sensordaten, Assistenzsystemdaten, automatische Fahrdaten, hochautonome Fahrdaten, autonome Fahrdaten, Verkehrszeichenerkennungsdaten, Telefonanrufdaten und/oder Videoanrufdaten umfassen.

5. Verfahren nach einem der vorstehenden Ansprüche,
**dadurch gekennzeichnet, dass**
der erste Synchronisierungsplan (S1) mindestens einen der folgenden Auslöser einschließt, um das erste Daten-Repository (L1) zwischen dem Fahrzeug (10) und der Backend-Vorrichtung (20) zu synchronisieren:
- eine erste Inbetriebnahme des Fahrzeugs (10),
- eine technische Inspektion,
- eine Systemaktualisierung,
- eine Änderung eines Benutzers des Fahrzeugs (10),
- neue statische Daten (D1) sind in dem ersten Daten-Repository (L1) verfügbar,
- neue Aktualisierungen für die statischen Daten (D1) sind an der Backend-Vorrichtung (20) für das erste Daten-Repository (L1) verfügbar, und/oder
- eine Benutzeranfrage.

6. Verfahren nach einem der vorstehenden Ansprüche,
**dadurch gekennzeichnet, dass**
der zweite Synchronisierungsplan (S2) mindestens einen der folgenden Auslöser einschließt, um das zweite Daten-Repository (L2) zwischen dem Fahrzeug (10) und der Backend-Vorrichtung (20) zu synchronisieren:
- Zündung ist eingeschaltet,
- Motor ist eingeschaltet,
- neue dynamische Daten (D2) sind in dem zweiten Daten-Repository (L2) verfügbar,
- neue Aktualisierungen für die dynamischen Daten (D2) sind an der Backend-Vorrichtung (20) für das zweite Daten-Repository (L2) verfügbar, und/oder
- Verlassen des Datenschutzmodus.

7. Verfahren nach einem der vorstehenden Ansprüche,
**dadurch gekennzeichnet, dass**
der erste Synchronisierungsplan (S1) die folgende Regel einschließt, um das erste Daten-Repository (L1) zwischen dem Fahrzeug (10) und der Backend-Vorrichtung (20) zu synchronisieren:
- alle statischen Daten (D1) des ersten Daten-Repositorys (L1) werden synchronisiert.

8. Verfahren nach einem der vorstehenden Ansprüche,
**dadurch gekennzeichnet, dass**
der zweite Synchronisierungsplan (S2) mindestens einen der folgenden Regeln einschließt, um das zweite Daten-Repository (L2) zwischen dem Fahrzeug (10) und der Backend-Vorrichtung (20) zu synchronisieren:
- alle dynamischen Daten (D2) des zweiten Daten-Repositorys (L2) werden mindestens einmal synchronisiert, und/oder
- nur Änderungen der dynamischen Daten (D2) und/oder Aktualisierungen für die dynamischen Daten (D2) werden regelmäßig synchronisiert.

9. Verfahren nach einem der vorstehenden Ansprüche,
**dadurch gekennzeichnet, dass**
das Bereitstellen des ersten Synchronisierungsplans (S1) und das Bereitstellen des zweiten Synchronisierungsplans (S2) automatisch an der Backend-Vorrichtung (20), automatisch in dem Fahrzeug (10) oder manuell in dem Fahrzeug (10) durchgeführt werden, insbesondere durch einen Benutzer des Fahrzeugs (10) oder einen Servicetechniker.

10. Verfahren nach einem der vorstehenden Ansprüche,
**dadurch gekennzeichnet, dass**
der Benutzer eines Fahrzeugs durch eine mobile Anzeigevorrichtung oder eine Anzeigevorrichtung an einem Fahrzeugarmaturenbrett (12) über einen Inhalt des ersten Daten-Repositorys (L1), einen Inhalt des zweiten Daten-Repositorys (L2), den ersten Synchronisierungsplan (S1) und/oder den zweiten Synchronisierungsplan (S2) benachrichtigt wird,
und/oder eine Bestätigungs- und/oder Anpassungsmöglichkeit eines Inhalts des ersten Daten-Repositorys (L1), eines Inhalts des zweiten Daten-Repositorys (L2), des ersten Synchronisierungsplans (S1) und/oder des zweiten Synchronisierungsplans (S2) für einen Benutzer des Fahrzeugs (10) bereitgestellt wird, insbesondere durch eine mobile Anzeigevorrichtung oder eine Anzeigevorrichtung an einem Fahrzeugarmaturenbrett (12).

11. Elektronische Steuereinheit (ecu), umfassend:
eine Speichereinheit (mu), die konfiguriert ist, um einen Programmcode zu speichern, und
eine Recheneinheit (cu), wobei, wenn der Programmcode durch die Recheneinheit (c) ausgeführt wird, ein Verfahren nach einem der vorstehenden Ansprüche vorgenommen wird.

12. Fahrzeug (10), umfassend eine elektronische Steuereinheit (ecu) nach dem vorstehenden Anspruch.

13. Computerprogrammprodukt, umfassend Anweisungen, die, wenn das Programm durch einen Computer durchgeführt wird, bewirken, dass der Computer ein Verfahren nach einem der Ansprüche 1 bis 10 ausführt.

## Revendications

1. Procédé de synchronisation d'une communication (D) entre un véhicule (10) et un dispositif dorsal (20) dans un système de véhicule-à-nuage (100), pour une configuration du véhicule (10) comportant une installation, une mise à jour du matériel, du logiciel, et du microprogramme, dans lequel le dispositif dorsal (20) est un ordinateur ou un groupe d'ordinateurs en tant que représentant d'un nuage,
comprenant les étapes suivantes :
1) fourniture d'un premier référentiel de données (L1) comprenant des données statiques (D1) au niveau du véhicule (10), dans lequel les données statiques comprennent des données changeant lentement ou ne changeant pas, qui n'ont pas besoin d'être changées plus d'une fois
2) fourniture d'un second référentiel de données (L2) comprenant des données dynamiques (D2) au niveau du véhicule (10), dans lequel les données dynamiques (D2) comprennent des données changeant fréquemment, qui doivent être synchronisées plus souvent que les données statiques,
3) fourniture d'un premier programme de synchronisation (S1) pour synchroniser le premier référentiel de données (L1) entre le véhicule (10) et le dispositif dorsal (20),
4) fourniture d'un second programme de synchronisation (S2) pour synchroniser le second référentiel de données (L2) entre le véhicule (10) et le dispositif dorsal (20),
5) exécution d'au moins un test de communication (t) entre le véhicule (10) et le dispositif dorsal (20),
6) synchronisation du premier référentiel de données (L1) entre le véhicule (10) et le dispositif dorsal (20) conformément au premier programme de synchronisation (S1),
7) synchronisation du second référentiel de données (L2) entre le véhicule (10) et le dispositif dorsal (20) conformément au second programme de synchronisation (S2), et
8) exécution d'au moins un test de vérification entre le véhicule (10) et le dispositif dorsal (20) afin de vérifier si la synchronisation du premier référentiel de données (L1) et/ou du second référentiel de données (L2) a réussi.

2. Procédé selon la revendication 1,
**caractérisé en ce que**
le premier référentiel de données (L1) et/ou le second référentiel de données (L2) sont fournis sous forme de liste, de base de données, de tableau, de fichier, de structure XML et/ou JSON,
et/ou les données statiques (D1) et/ou les données dynamiques (D2) comprennent des données concernant au moins un dispositif de véhicule (11) utilisant des services mobiles en ligne (MOD) fournis dans le système de véhicule-à-nuage(100), dans lequel en particulier les services mobiles en ligne (MOD) comportent des opérations de sécurité, d'intelligence, environnementales, confortables et agréables, et/ou les données statiques (D1) comprennent des données concernant une version des services mobiles en ligne (MOD).

3. Procédé selon l'une des revendications précédentes,
**caractérisé en ce que**
les données statiques (D1) comprennent des données qui changent lentement ou ne changent pas qui doivent être actualisées au maximum au cours d'une période de temps mensuelle, au cours d'une période de temps annuelle, après une mise en service du véhicule (10), après un contrôle technique du véhicule (10), après un changement d'utilisateur du véhicule (10) et/ou après une demande d'un utilisateur du véhicule (10), et/ou les données statiques (D1) comprennent des données personnelles, des données de consentement, des données de contact, des données d'intérêt, des données anonymes, des données de transaction et/ou des données d'activation de transaction.

4. Procédé selon l'une des revendications précédentes,
**caractérisé en ce que**
les données dynamiques (D2) comprennent des données changeant fréquemment qui doivent être actualisées au moins dans une période de temps quotidienne, après chaque changement et/ou de manière répétée chaque jour, et/ou les données dynamiques (D2) comprennent des données de suivi, des données de localisation, des paramètres de confidentialité, des données de diffusion vidéo, des données de diffusion audio, des données de navigation, des données de prévisions météorologiques, des données de capteurs, des données de système d'assistance, des données de conduite automatique, des données de conduite hautement autonome, des données de conduite autonome, des données de reconnaissance de panneaux de signalisation, des données d'appel téléphonique et/ou des données d'appel vidéo.

5. Procédé selon l'une des revendications précédentes,
**caractérisé en ce que**
le premier programme de synchronisation (S1) comporte au moins l'un des déclencheurs suivants pour synchroniser le premier référentiel de données (L1) entre le véhicule (10) et le dispositif dorsal (20) :
- une première mise en service du véhicule (10),
- un contrôle technique,
- une mise à jour du système,
- un changement d'utilisateur du véhicule (10),
- de nouvelles données statiques (D1) sont disponibles dans le premier référentiel de données (L1),
- de nouvelles mises à jour pour les données statiques (D1) sont disponibles au niveau du dispositif dorsal (20) pour le premier référentiel de données (L1), et/ou
- une demande de l'utilisateur.

6. Procédé selon l'une des revendications précédentes,
**caractérisé en ce que**
le second programme de synchronisation (S2) comporte au moins l'un des déclencheurs suivants pour synchroniser le second référentiel de données (L2) entre le véhicule (10) et le dispositif dorsal (20) :
- le contact est mis,
- le moteur est allumé,
- de nouvelles données dynamiques (D2) sont disponibles dans le second référentiel de données (L2),
- de nouvelles mises à jour pour les données dynamiques (D2) sont disponibles au niveau du dispositif dorsal (20) pour le second référentiel de données (L2), et/ou
- la sortie du mode de confidentialité.

7. Procédé selon l'une des revendications précédentes,
**caractérisé en ce que**
le premier programme de synchronisation (S1) comporte la règle suivante pour synchroniser le premier référentiel de données (L1) entre le véhicule (10) et le dispositif dorsal (20) :
- toutes les données statiques (D1) du premier référentiel de données (L1) seront synchronisées.

8. Procédé selon l'une des revendications précédentes,
**caractérisé en ce que**
le second programme de synchronisation (S2) comporte au moins l'une des règles suivantes pour synchroniser le second référentiel de données (L2) entre le véhicule (10) et le dispositif dorsal (20) :
- toutes les données dynamiques (D2) du second référentiel de données (L2) seront synchronisées au moins une fois, et/ou
- seuls des changements des données dynamiques (D2) et/ou des mises à jour pour les données dynamiques (D2) seront synchronisés régulièrement.

9. Procédé selon l'une des revendications précédentes,
**caractérisé en ce que**
la fourniture du premier programme de synchronisation (S1) et la fourniture du second programme de synchronisation (S2) sont exécutées automatiquement au niveau du dispositif dorsal (20), automatiquement dans le véhicule (10) ou manuellement dans le véhicule (10), en particulier par un utilisateur du véhicule (10) ou un technicien de service.

10. Procédé selon l'une des revendications précédentes,
**caractérisé en ce que**
l'utilisateur d'un véhicule sera notifié par un dispositif d'affichage mobile ou un dispositif d'affichage au niveau d'un tableau de bord de véhicule (12) au sujet d'un contenu du premier référentiel de données (L1), d'un contenu du second référentiel de données (L2), du premier programme de synchronisation (S1) et/ou du second programme de synchronisation (S2),
et/ou une possibilité de confirmation et/ou d'ajustement d'un contenu du premier référentiel de données (L1), d'un contenu du second référentiel de données (L2), du premier programme de synchronisation (S1) et/ou du second programme de synchronisation (S2) est fournie pour un utilisateur du véhicule (10), en particulier par un dispositif d'affichage mobile ou un dispositif d'affichage au niveau d'un tableau de bord de véhicule (12).

11. Unité de commande électronique (ecu) comprenant :
une unité de mémoire (mu), configurée pour stocker un code de programme, et
une unité de calcul (cu), dans laquelle, lors de la mise en œuvre du code de programme par l'unité de calcul (cu), un procédé selon l'une des revendications précédentes est effectué.

12. Véhicule (10) comprenant une unité de commande électronique (ecu) selon la revendication précédente.

13. Produit-programme d'ordinateur comprenant des instructions, qui lorsque le programme est exécuté par un ordinateur, amènent l'ordinateur à mettre en œuvre le procédé selon l'une quelconque des revendications 1 à 10.
